(19) Europäisches Patentamt

European Patent Office

Office européen des brevets

(11) **EP 0 509 921 B1**

(12) **FASCICULE DE BREVET EUROPEEN**

(45) Date de publication et mention
de la délivrance du brevet:
**08.05.1996 Bulletin 1996/19**

(51) Int Cl.⁶: **F01D 1/10**

(21) Numéro de dépôt: **92401060.6**

(22) Date de dépôt: **15.04.1992**

(54) **Turbine à action à rotor tambour**

Aktionsturbinen

Action turbines

(84) Etats contractants désignés:
**AT BE CH DE DK ES FR GB GR IT LI LU NL SE**

(30) Priorité: **19.04.1991 FR 9104855**

(43) Date de publication de la demande:
**21.10.1992 Bulletin 1992/43**

(73) Titulaire: **GEC ALSTHOM SA**
**F-75116 Paris (FR)**

(72) Inventeurs:
• **Gros, Jean-Pierre**
**F-93250 Villemomble (FR)**

• **Verschaeve, Guillaume**
**F-45800 St Jean de Braye (FR)**

(74) Mandataire: **Vigand, Privat et al**
**SOSPI**
**14-16, rue de la Baume**
**F-75008 Paris (FR)**

(56) Documents cités:
**FR-A- 2 149 619**          **US-A- 2 197 521**

# Description

La présente invention concerne une turbine à vapeur à action selon le préambule de la revendication 1.

Dans les turbines à action connues (FR-A-2149619) les aubes mobiles sont montées sur des disques solidaires du rotor.

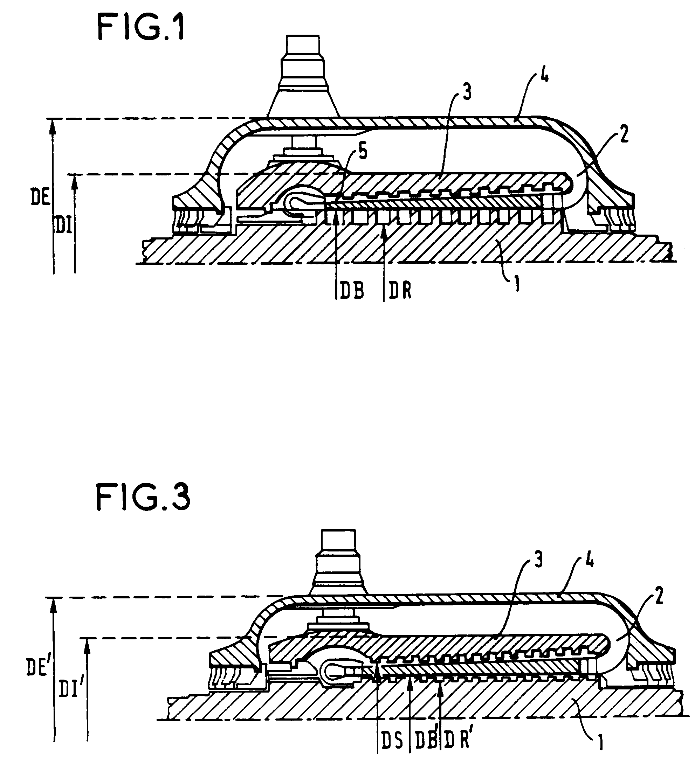

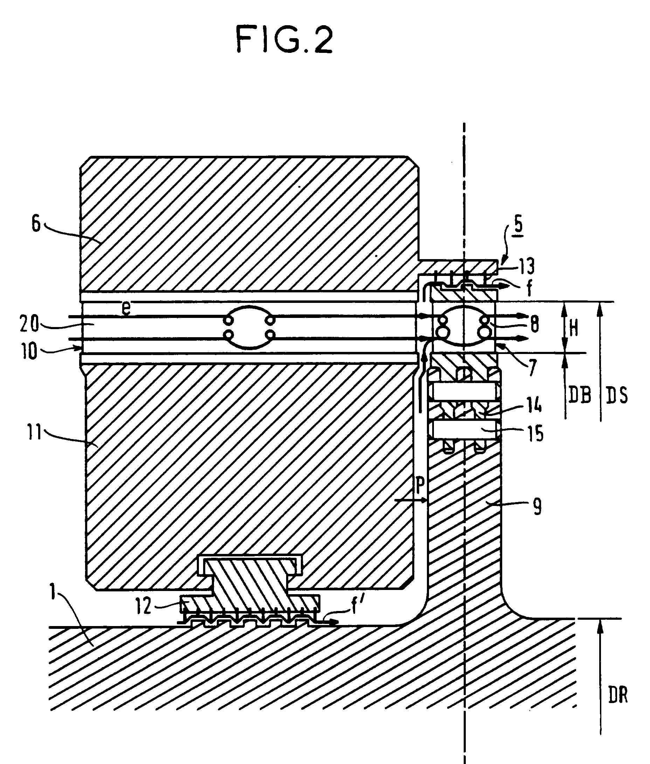

Pour des raisons de comportement dynamique du rotor (voir figure 1), il est indispensable de lui donner une rigidité suffisante conduisant à un diamètre de moyeu DR convenable. En revanche, pour des problèmes de rendement, il est nécessaire de maintenir ce diamètre le plus faible possible : une réduction du diamètre permet de réduire la section de fuite entre parties fixes et mobiles, donc la fuite elle-même. Ces deux règles permettent de déterminer le diamètre du rotor DR par un compromis.

Afin de pouvoir fixer les aubes mobiles sur le disque du rotor sans que celui-ci perde ses qualités mécaniques, il est nécessaire de ménager un espace suffisant entre la base de l'aube et le fût du rotor. Dans ces conditions, quand le diamètre DR est fixé, il existe une borne inférieure au diamètre de base DB de l'aube.

Par ailleurs pour améliorer le rendement (voir figure 2) il y a intérêt à augmenter l'élancement Z (rapport entre le diamètre sommet aube $D_s$ et le diamètre de base aube DB). En effet, plus Z est élevé (à largeur des aubes données), plus les pertes dues aux écoulements secondaires (e) sont faibles. Cependant, une fois que les conditions de fonctionnement de la machine sont fixées, la section de passage de la vapeur est déterminée. Or celle-ci est proportionnelle à $DB^2(Z^2-1)$. Il est donc clair que pour améliorer le rendement, il est nécessaire de réduire DB au maximum, jusqu'à sa borne inférieure.

De plus il est nécessaire de réduire au maximum les fuites entre parties fixes et mobiles (f, f') pour augmenter le rendement.

En particulier la fuite de vapeur (f') passant sous les aubages fixes est très pénalisante pour le rendement : non seulement cette vapeur ne fournit aucun travail utile, mais, du fait de la présence des disques en aval des aubages fixes, elle pénètre radialement dans l'écoulement principal et le dégrade.

Enfin, les efforts de pression (p) sur le rotor et les aubages mobiles qui sont d'ailleurs relativement faibles peuvent conduire dans certains cas à prévoir en tête de machine un piston d'équilibrage de diamètre légèrement supérieur à DR contribuant ainsi à baisser légèrement le rendement.

Par ailleurs il existe des turbines à vapeur dites à réaction dans lesquelles la chute de pression dans un étage est répartie en deux parties sensiblement égales entre l'aubage fixe et l'aubage mobile de cet étage.

Les aubes mobiles sont fixées directement sur le fût du rotor. Le diamètre de base des aubes DB est voisin du diamètre du fût DR (rotor tambour).

En raison de la chute de pression dans les aubages mobiles, la poussée sur ces aubages est très importante et induit inéluctablement pour équilibrer cette poussée à prévoir en tête de machine un piston d'équilibrage de grand diamètre qui peut atteindre DS (Diamètre au Sommet de l'aube mobile). Ceci contribuant à baisser de manière importante le rendement.

On voit donc que les problèmes de poussée pénalisent très fortement le rendement des turbines à réaction par la fuite due au grand diamètre du piston d'équilibrage.

Dans les turbines à réaction on ne peut pas pour diminuer les fuites réduire le diamètre de base DB.

En effet, cette opération s'accompagnerait d'une augmentation du nombre d'étages telle qu'elle serait insupportable du point de vue prix et de l'encombrement longitudinal du module considéré spécialement lorsqu'il s'agit d'un module haute pression.

Il faut noter enfin que, dans les machines à réaction donc à rotor tambour, la fuite passant sous les aubes fixes n'a pas l'effet perturbateur qu'elle a dans les machines à disques et à action.

L'invention permettant de diminuer le diamètre de base DB dans une turbine à action consiste à ne plus utiliser des disques pour fixer les aubes mobiles mais à les fixer directement sur le rotor lui-même comme elles le sont dans les turbines à réaction.

La turbine à vapeur à action selon l'invention présente la combinaison des caractéristiques décrites dans la revendication 1.

. Dans la turbine selon l'invention on obtient un très bon allongement des veines vapeur dans les zones de détente ce qui permet d'améliorer leur rendement aérodynamique.

Ceci est intéressant pour toutes les veines de turbine à action à faible débit/volume en tête de machine et en particulier les veines haute pression des turbines subcritiques à faible débit masse et les veines haute pression des turbines supercritiques quelque soit le débit masse.

Dans la turbine selon l'invention lorsqu'on diminue le diamètre de base DB, on doit augmenter le nombre d'étages.

Toutefois, il faut noter que l'augmentation du nombre d'étages ne s'accompagne pas d'une augmentation de la longueur de la veine.

Ceci est dû aux facteurs suivants

- Conservation de la même largeur pour les aubes mobiles (à niveau de contraintes équivalent).
- Réduction des épaisseurs des diaphragmes due à la réduction du $\Delta$ p et de la surface d'application des efforts.
- Suppression des disques du rotor et élimination des surlongueurs axiales dues au perçage de ces disques, pour la fixation des aubes mobiles.
- Suppression des jeux nécessaires entre disques et diaphragmes.

Il apparaît, en outre, une réduction de la dimension transversale de l'ensemble du module due à la réduction du diamètre de base de la veine.

L'intérêt de cette réduction est d'autant plus grand qu'il s'agit de module haute pression ce qui facilite la tenue mécanique des parties statoriques.

L'invention va maintenant être décrite plus en détail en se référant à des modes de réalisation particuliers cités à titre d'exemple non limitatif et représentés par des dessins annexés.

La figure 1 représente en coupe une turbine à action classique avec rotor tambour.

La figure 2 représente un étage de la turbine de la figure 1.

La figure 3 représente en coupe la turbine à action selon l'invention avec rotor tambour.

La figure 4 représente un étage de la turbine de la figure 3.

La figure 5 représente en coupe un étage de la turbine à action selon l'invention munie d'un premier perfectionnement.

La figure 6 représente en coupe un étage de la turbine à action selon l'invention munie d'un second perfectionnement.

La figure 7 représente en coupe un étage à action classique muni du même perfectionnement que celui de la figure 6.

La figure 8 représente en coupe un étage de la turbine à action selon l'invention munie d'un troisième perfectionnement.

La figure 9 représente en perspective un étage de turbine à action sur un rotor à disque montrant la fuite au sommet de l'aube mobile en provenance de la sortie de l'aubage fixe (vecteur incliné de l'aryle $\alpha 1$).

La figure 10 représente en perspective l'étage de la figure 8 sur un rotor tambour montrant la fuite au sommet de l'aube mobile en provenance de la fuite base du diaphragme par l'intermédiaire de trous axiaux.

La figure 11 représente en coupe un étage de la turbine à action selon l'invention munie d'un quatrième perfectionnement.

La figure 12 représente une coupe cylindrique de la figure 11.

La figure 13 représente les gains de rendement obtenus avec l'invention.

La turbine à action classique représentée aux figures 1 et 2 comporte un rotor 1 et un stator 2 comprenant un stator interne 3 et un stator externe 4, et plusieurs étages 5. Chaque étage 5 est constitué d'un diaphragme 6 solidaire du stator interne 3 suivi d'un aubage mobile 7.

L'aubage mobile 7 comprend des aubes mobiles 8 fixées sur un disque 9 solidaire du rotor 1.

Le diaphragme 6 comporte l'aubage fixe 10 constitué d'aubes fixes 20 disposées devant les aubes mobiles 8. Ces aubes 20 supportent une couronne 11 sur laquelle est montée une garniture 12 faisant l'étanchéité avec le fût du rotor 1.

Par ailleurs, au sommet des aubes mobiles 8 est montée une garniture 13 assurant l'étanchéité rotor/stator. Cette garniture est en outre une protection thermique du stator.

Les aubes mobiles 8 sont munies de pieds à doigts 14 fixés dans le disque 9 par des broches 15.

Le diamètre DR du fût du rotor 1 est fixé par un compromis entre la rigidité du rotor qui exige d'avoir un diamètre suffisant et la diminution des fuites qui est obtenue en diminuant le diamètre le plus possible.

Pour fixer les aubes 8 sur le disque 9, sans que celui-ci perde ses qualités mécaniques, il faut prévoir un espace suffisant entre le fût du rotor 1 et le pied des aubes 8. Dans ces conditions lorsque DR est fixé, la borne inférieure de DB (diamètre de base des aubes) est fixée.

Dans la turbine à action l'aubage fixe 10 assure 85% à 95% de la chute de pression de l'étage à la base, le reste étant assuré par l'aubage mobile 7.

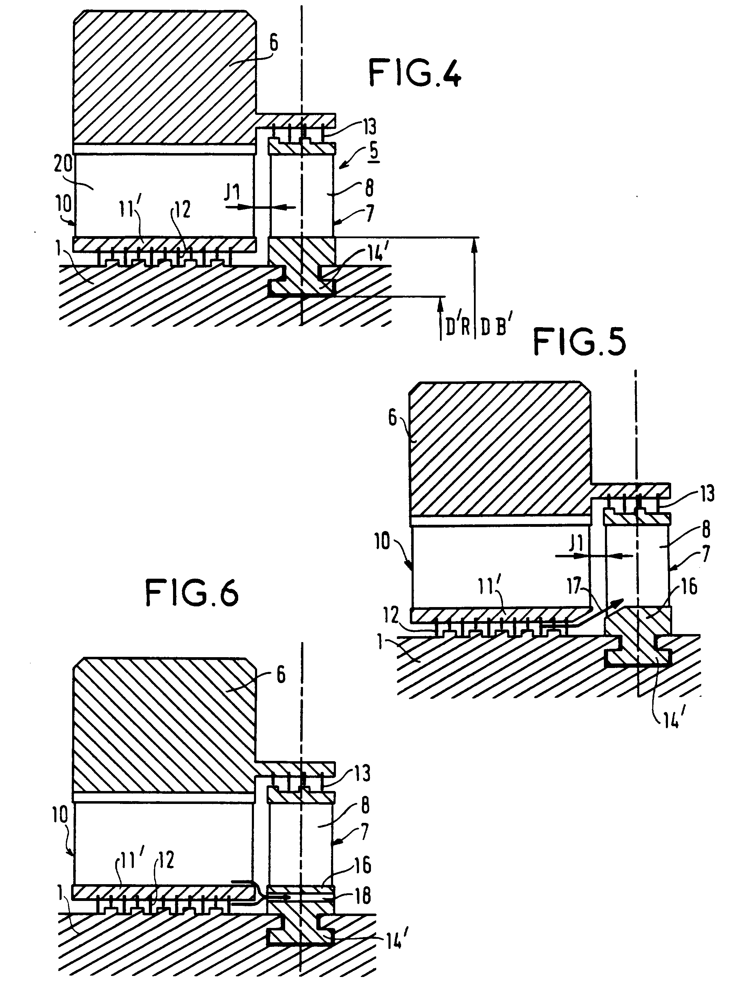

La turbine à action, selon l'invention, est représentée aux figures 3 et 4. Les éléments correspondants sont représentés par les mêmes références que sur les figures 1 et 2.

Cette turbine comporte donc un aubage fixe 10 suivi d'un aubage mobile 7, l'aubage fixe 10 assure 85% à 95% de la chute de pression de l'étage à la base le reste étant assuré par l'aubage mobile 7.

Les aubes mobiles 8 ne sont pas fixées sur des disques mais directement sur le rotor 1 (rotor tambour). Il s'ensuit que DB' (diamètre de base des aubes 8) est très voisin de DR' (diamètre du fût du rotor); DB' étant plus petit que DB, la hauteur H du passage vapeur augmente et le rendement de cette turbine à action est amélioré.

Malgré l'augmentation de la hauteur de l'aubage fixe (10) la surface d'application de l'effort de pression sur le diaphragme est nettement inférieure à celle de la turbine classique (couronne intérieure 11' réduite à un simple bandage, diamètre de la couronne extérieure nettement plus faible).

En outre il y a réduction de la chute de pression $\Delta p$ sur l'ensemble du diaphragme car cette solution comporte plus d'étages.

Il est donc possible de réduire l'épaisseur de ce diaphragme par rapport à celui de la solution classique.

Il n'est plus nécessaire de prévoir la surlongueur axiale entre disques qui était nécessaire dans la turbine classique pour permettre le perçage des disques. Il n'est également plus nécessaire de prévoir un écartement diaphragme disque qui était rendu nécessaire par la flèche prise par le diaphragme. L'entrefer J1 est donc réduit.

Comme on le voit en comparant les figures 1 et 3, les diamètres de fût de rotors DR' et DR sont sensiblement égaux.

Par contre DB' est inférieur à DB. Le nombre d'étages de la turbine selon l'invention est multiplié par le rapport

$$\frac{(\text{ DB })^2}{(\text{ DB' })^2}$$

mais cette augmentation du nombre d'étages ne s'accompagne pas d'une augmentation de la longueur de la turbine, pour les raisons évoquées ci-dessus et la longueur totale de chacun des modules est la même.

Etant donné que le diamètre de base DB′ est inférieur à DB les diamètres du stator interne DI′ et du stator externe DE′ sont inférieurs aux diamètres correspondants DI et DE de la turbine à action classique.

La turbine selon l'invention présente donc un grand avantage de construction par rapport à la turbine classique. L'augmentation de rendement avec la turbine selon l'invention peut atteindre 5 % pour les modules HP de turbine supercritiques et 3,5 % pour les modules HP subcritiques.

Selon un perfectionnement de l'invention représenté à la figure 5 les talons 16 (partie du pied 14′ dépassant du rotor 1) des aubes mobiles 8 et le bandage inférieur 11′ du diaphragme 6 qui leur fait face sont chanfreinés de façon à ce que la fuite passant par la garniture 12 soit injectée pratiquement axialement dans l'écoulement principal. Dans ces conditions, la fuite perturbe moins l'écoulement principal, d'où une augmentation supplémentaire du rendement.

A noter que l'existence du chanfrein 17 n'entraîne pas d'augmentation de l'entrefer qui est égal donc à l'entrefer J1 de la turbine de la figure 4.

Selon un autre perfectionnement de l'invention représenté à la figure 6, on perce un trou 18 dans le talon 16 de chaque aube mobile 8 parallèlement à l'axe du rotor 1.

La section de passage du trou 18 est prise suffisamment importante pour assurer la totalité du débit de fuites passant sous le diaphragme 6 ainsi qu'une très faible fraction du débit principal, ce qui élimine la perturbation des écoulements secondaires et la perte qui y est liée.

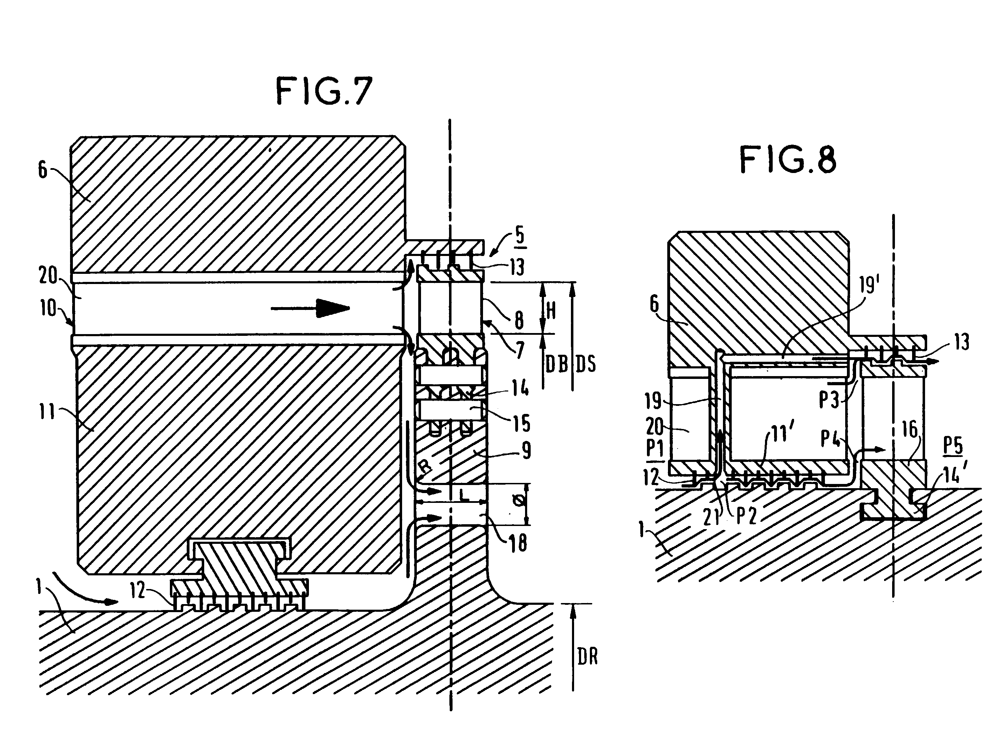

Le perçage des trous 18 dans les talons 16 des aubes 8 ne présente aucune difficulté; de plus, on peut adopter le diamètre optimal des trous pour chaque aubage mobile 7. Par contre, dans les turbines à action avec disques (figure 7) le perçage des disques est délicat et pas toujours possible en raison du diamètre du fût ou de la profondeur des doigts. De plus, le perçage de ces trous se fait avec un seul foret sur tous les disques à la fois ce qui implique qu'ils aient tous le même diamètre ce qui empêche l'optimisation des dimensions.

Par ailleurs, la taille de ces trous 18, importante par leur mode de construction, ne permet pas d'obtenir un arrondi optimal à l'entrée (rapport R/∅ ; R = rayon de raccordement entre le trou et la face du disque, ∅ = diamètre du trou), ni un rapport L/∅ optimal (L = longueur du trou).

En effet, il est nécessaire de choisir un rapport R/∅ supérieur à 0.5 et un rapport L/∅ supérieur à 2 pour s'assurer que le coefficient de débit du trou est quasiment indépendant de l'incidence du fluide.

Par ailleurs, la présence de ces trous 18 modifie les courants de ventilation, donc la répartition de pression sur le disque. La différence de pression, entre l'amont et l'aval du trou n'est pas correctement connue (même si la différence de pression entre l'amont et l'aval de l'aube, à la base, est parfaitement déterminée). Cette incertitude se répercute à la fois sur le débit passant dans le trou et sur la poussée qui s'exerce sur le disque.

Dans ces conditions le dimensionnement optimal des trous d'équilibrage 18 est très difficile à atteindre. Dans la réalité, il s'ensuit un gain de rendement beaucoup plus faible que le maximum envisageable théoriquement.

Par contre, dans l'aubage mobile selon l'invention on peut avoir les avantages suivants:

- l'arrondi à l'entrée est optimal (R/∅ environ 1).
- l'incidence de la vapeur à l'entrée est connue, et n'a, de plus, qu'une faible influence sur le débit de vapeur passant dans le trou.
- la différence de pression entre l'amont et l'aval du trou (fixé par le degré de réaction à la base de l'aube) est tout à fait déterminé.
- le rapport L/∅ est optimal.
- Dans ces conditions le dimensionnement des trous d'équilibrage ne pose aucune difficulté, et leur efficacité est proche du maximum envisageable théoriquement.

De plus l'incertitude sur la poussée-butée n'est pas augmentée.

Enfin toutes les études menées montrent que la taille des trous nécessaire est telle que le trou 18 ne détériore pas les qualités mécaniques du talon 16 de l'aube 8.

Selon un autre perfectionnement de l'invention représenté aux figures 8 à 10, on perce un trou 19 dans chaque aube fixe, prolongé d'un trou 19′ dans la couronne périphérique dirigé axialement. On peut ainsi prélever de la vapeur de fuite dans la première chambre 21 de la garniture 12 du diaphragme 6 et l'injecter axialement à l'entrée des garnitures 13 des aubes mobiles 8, en mettant à profit l'étagement de pression existant dans un étage : P1> P2> P3 > P4 > P5.

Dans ces conditions, une partie de la fuite à la base du diaphragme 6 est injectée au sommet de l'aube mobile 8 ce qui permet de réduire, au global le débit soustrait du débit principal du fluide qui travaille dans l'aubage mobile 7, d'où une augmentation du rendement.

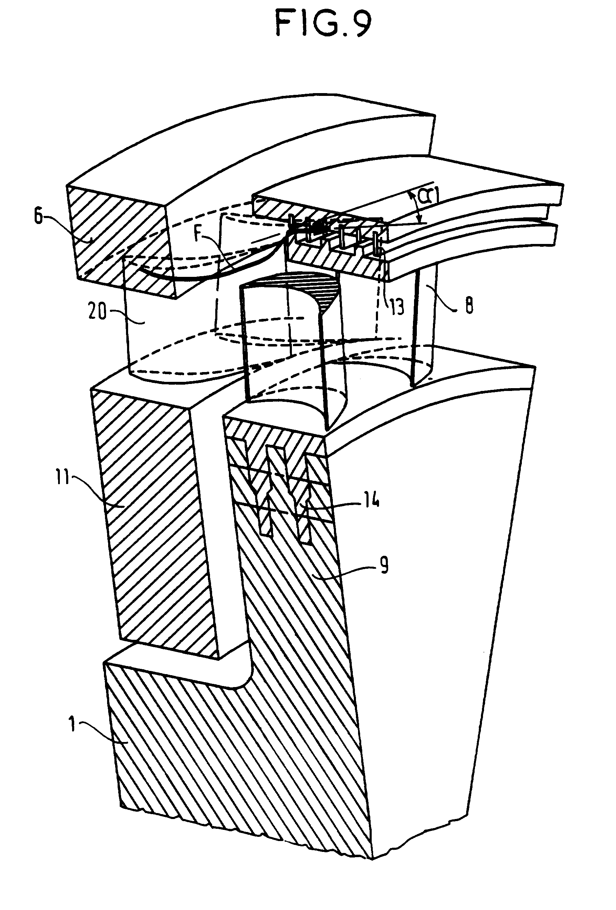

De plus, ce système procure un avantage qui peut être déterminant dans le cas de certaines machines. En effet, les machines actuelles, suite à l'augmentation de puissance obtenue avec un seul rotor, peuvent présenter des instabilités avant d'atteindre la pleine charge. Ces instabilités sont dues à des efforts transverses situés à la périphérie des aubes provoqués par les fuites du fluide entre les parties fixes et mobiles (voir figure 9).

Il a été montré sur des machines d'essais et des machines réelles (compresseurs centrifuges et turbines), que ces efforts sont déstabilisants quand le fluide qui pénètre dans les garnitures possède un mouvement de rotation important (F), et que ces efforts sont stabilisants quand le fluide pénètre axialement dans les garnitures (F').

Grâce à ce perfectionnement le débit de vapeur à l'entrée de la garniture 13 ne se fait plus suivant l'angle de sortie $\alpha_1$ des aubes fixes mais axialement.

La plus grande partie du débit de fluide qui pénètre dans les garnitures d'étanchéité 13 des aubes mobiles n'a donc pas de mouvement de rotation, et cette fuite, déstabilisante devient grâce à ce perfectionnement stabilisante.

Bien qu'ayant une inertie de flexion plus importante que les rotors à disques, ce perfectionnement des rotors tambours permet en plus d'augmenter de manière importante la marge de stabilité des modules HP, notamment dans le cas des machines supercritiques.

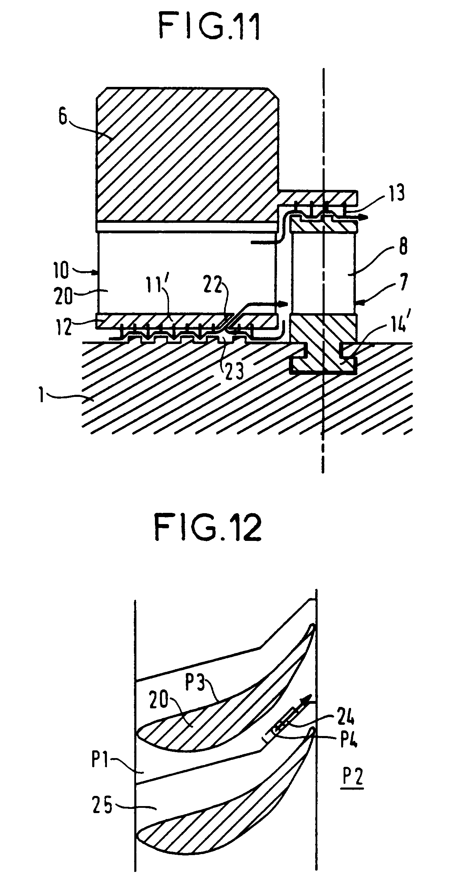

Selon un autre perfectionnement de l'invention représenté aux figures 11 et 12, on perce une canalisation inclinée 22 entre une des dernières chambres 23 de la garniture d'étanchéité 12 du diaphragme 6 et le col de chaque groupe d'aubes fixes 20 successives. Grâce à la différence de pression, on réinjecte la totalité de la fuite de l'aubage fixe dans le canal vapeur 25.

Cela permet également de créer une légère aspiration du débit 24 en amont de l'aubage mobile dans l'entrefer entre aubage fixe 10 et aubage mobile 7.

Dans ces conditions, la fuite à la base du diaphragme 6 ne perturbe plus l'écoulement principal et permet d'améliorer la qualité de l'écoulement dans le canal de l'aubage fixe 10 (soufflage de la couche limite).

Ce système utilise l'étagement des pressions dans le canal 25 comme indiqué sur la figure 12 :

$$P1 > P2 > P3 > P4$$

Les perfectionnements représentés dans les figures 5, 6, 8, 10 et 11 peuvent être utilisés séparément. On peut également les utiliser simultanément en particulier dans les groupements suivants.

- perfectionnements des figures 5 et 8.
- perfectionnements des figures 6 et 8.
- perfectionnements des figures 8 et 11.

Dans les modules HP des turbines à action subcritiques (180 bars) et supercritiques (> 200 bars) l'invention permet :

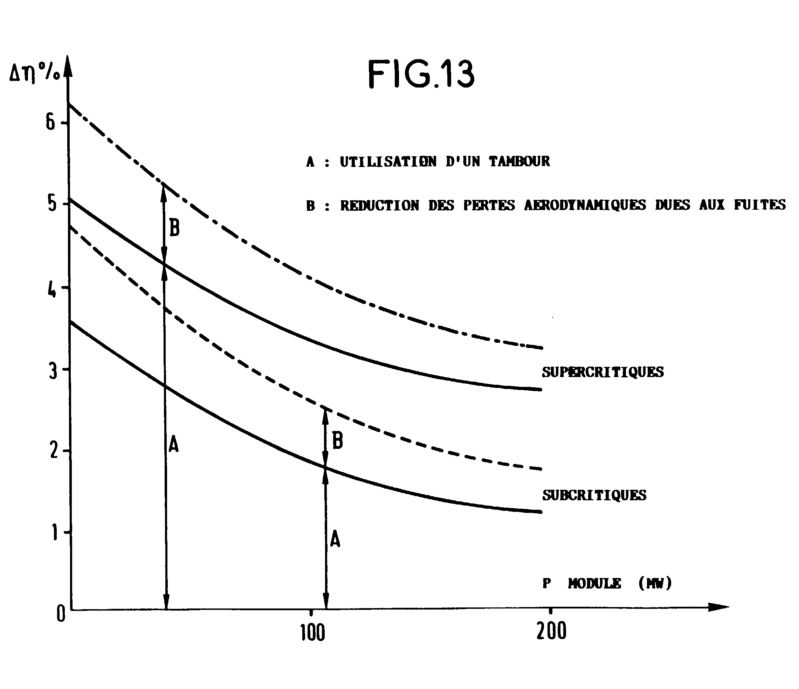

- D'améliorer d'une quantité (A) le rendement aérodynamique des veines HP considérées de 1 % à 4 % (suivant la puissance de la machine et le cycle thermodynamique choisi), par la seule utilisation d'un rotor tambour (voir figure 13).
- Le rotor tambour facilite la mise en place de dispositifs permettant de réduire les pertes aérodynamiques dues à la fuite de la vapeur au diamètre DR' du diaphragme 6 et réinjecté en amont de l'aubage mobile comme explicité ci-dessus (perçage des aubes distributrices ; perçage du bandage inférieur ; trous d'équilibrage; chanfrein du bandage inférieur). Les pertes aérodynamiques dues à la réinjection de la fuite sont très importantes dans les turbines à action en raison de la chute importante de pression dans l'aubage fixe. Elles peuvent être comprises entre 1 % et 2 % du rendement du module. Les dispositifs présentés permettent une réduction de ces pertes d'une quantité (B) allant jusqu'à 70 % (voir figure 13).

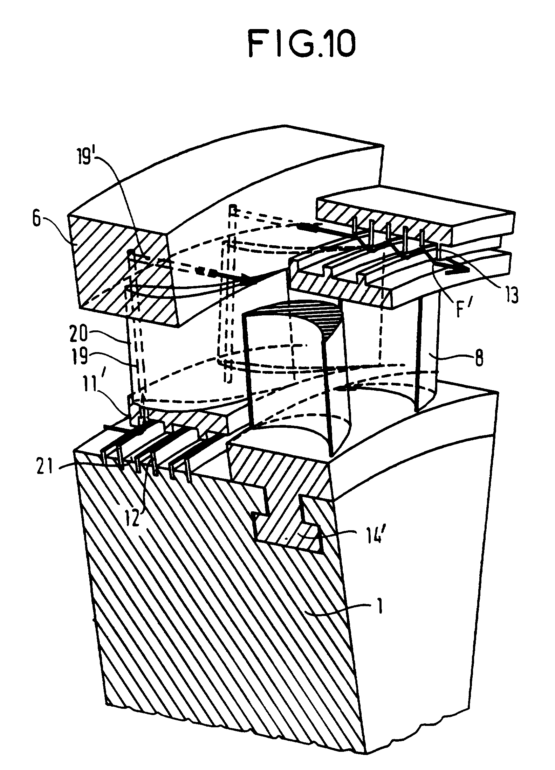

- Le rotor tambour facilite la mise en place d'un dispositif (perçage des aubes des diaphragmes) permettant de réduire les instabilités du rotor dues aux efforts vapeur (voir figures 9 et 10).
- Il permet de réduire les dimensions transversales et la masse des modules.
- Il facilite la tenue à la pression des parties statoriques.

Ceci se fait tout en conservant les dimensions longitudinales du module.

Enfin, le fait de conserver le principe de turbine à action en utilisant un rotor tambour a l'avantage suivant :

A longueur de rotor égale, le diamètre de base est plus faible pour la machine à action que la machine à réaction (toutes les deux à rotor tambour). Outre les gains de rendement obtenus dans le canal vapeur lui-même déjà exposés précédemment, la très faible poussée sur le rotor de la turbine à action fait que son piston d'équilibrage a un diamètre beaucoup plus faible que celui de la turbine à réaction. Ce dernier point se traduit par un nouveau gain de rendement pouvant atteindre 2 % dans le cas de certaines machines à très haute pression.

**Revendications**

1. Turbine à vapeur à action comprenant un rotor (1) et un stator (2) et plusieurs étages (5) constitués chacun d'un diaphragme avec aubage fixe (10) comprenant des aubes fixes (20) supportant une couronne (11') intérieure, suivi d'un aubage mobile (7) comprenant des aubes (8) tournant avec le rotor, ledit aubage fixe (10) réalisant plus de 85 % de la chute de pression à la base de l'étage (5), caractérisée en ce que les aubes (8) de l'aubage mobile (7) sont montées directement sur le fût du rotor (1) et en ce que la couronne (11') intérieure est un bandage (11') de sorte que le diamètre de base des aubes fixes (8) soit sensiblement du même ordre que le diamètre du fût du rotor (1), une garniture (12) d'étanchéité, faisant l'étanchéité avec le fût du rotor, étant montée sur le bandage (11').

**2.** Turbine à vapeur selon la revendication 1 comportant une fuite à la base du diaphragme (6), caractérisée en ce que ladite fuite est injectée pratiquement axialement dans l'écoulement principal.

**3.** Turbine à vapeur selon la revendication 1, caractérisée en ce que le talon (16) de chaque aube (8) fixé sur le rotor (1) est percé d'un trou (18) sensiblement parallèle à l'axe du rotor mettant en communication les deux côtés du talon (16) dont l'embouchure est située au voisinage de la base du diaphragme (6).

**4.** Turbine à vapeur selon l'une des revendications 1 à 3 dans laquelle la base du diaphragme (6) comporte une garniture d'étanchéité (12) comprenant plusieurs chambres en série et le sommet des aubes mobiles (8) comprend une garniture d'étanchéité (13), caractérisée en ce que les aubes fixes (20) et le diaphragme (6) sont munis de trous (19, 19') aspirant la vapeur de fuite dans la première chambre (21) de la garniture (12) à la base du diaphragme (6) et l'injectant axialement à l'entrée de la garniture (13) des aubes mobiles (8).

**5.** Turbine à vapeur selon la revendication 3 dans laquelle le bandage (11') du diaphragme (6) sur lequel sont montés les pieds des aubes fixes (20) comporte une garniture d'étanchéité (12) constituée de plusieurs chambres en série, caractérisée en ce que le bandage (11') comporte des canaux inclinés (22) reliant une des dernières chambres (23) avec l'écoulement principal de façon que la fuite à la base du diaphragme (6) soit réintroduite tangentiellement dans le canal (25) formé par deux aubes successives (20) de l'aubage fixe (10).

**Claims**

**1.** An impulse steam turbine comprising a rotor (1) and a stator (2) having a plurality of stages (5) each constituted by a diaphragm with stationary blading (10) comprising stationary blades (20) supporting an inner ring (11'), followed by moving blading (7) comprising blades (8) that rotate with the rotor, said stationary blading (10) providing more than 85% of the pressure drop at the base of each stage (5), the turbine being characterized in that the blades (8) of the moving blading (7) are mounted directly on the shaft of the rotor (1), and in that the inner ring (11') is a hoop (11') such that the diameter at the base of the stationary blades (8) is substantially of the same order as the diameter of the shaft of the rotor (1), a sealing gland (12) being mounted on the hoop (11') for sealing relative to the shaft of the rotor.

**2.** A steam turbine according to claim 1, including leakage at the base of the diaphragm (6) and characterized in that said leakage is injected practically axially into the main flow.

**3.** A steam turbine according to claim 1, characterized in that the heel (16) of each blade (8) fixed to the rotor (1) is pierced by a hole (18) extending substantially parallel to the axis of the rotor and putting the two sides of the heel (16) into communication with each other, the inlet of the hole being situated in the vicinity of the base of the diaphragm (6).

**4.** A steam turbine according to any one of claims 1 to 3, in which the base of the diaphragm (6) includes a sealing gland (12) comprising a plurality of chambers in series, and the tips of the moving blades (8) include a sealing gland (13), the steam turbine being characterized in that the stationary blades (20) and the diaphragm (6) are provided with holes (19, 19') sucking leakage steam from the first chamber (21) of the gland (12) at the base of the diaphragm (6) and injecting said steam axially to the inlet of the gland (13) for the moving blades (8).

**5.** A steam turbine according to claim 1, in which the hoop (11') of the diaphragm (6) on which the roots of the stationary blades (20) are mounted includes a sealing gland (12) constituted by a plurality of chambers in series, characterized in that the hoop (11') includes sloping channels (22) connecting one of the last chambers (23) with the main flow so that the leakage at the base of the diaphragm (6) is reinserted tangentially into the channel (25) formed between two successive blades (20) of the stationary blading (10).

**Patentansprüche**

**1.** Aktions-Dampfturbine mit einem Rotor (1) und einem Stator (2) sowie mehreren Stufen (5), die je aus einer Blende mit einer festen Beschaufelung (10) in Form von ortsfesten Schaufeln (20), die einen inneren Kranz (11') tragen, und aus einer nachfolgenden beweglichen Beschaufelung (7) bestehen, die mit dem Rotor umlaufende Schaufeln enthält, wobei die feste Beschaufelung (10) mehr als 85% des Druckabfalls an der Basis der Stufe (5) bewirkt, dadurch gekennzeichnet, daß die Schaufeln (8) der beweglichen Beschaufelung (7) unmittelbar auf den Kern des Rotors (1) montiert sind und daß der innere Kranz (11') eine Bandage ist, derart, daß der Basisdurchmesser der ortsfesten Schaufeln (8) im wesentlichen den gleichen Wert wie der Durchmesser des Kerns des Rotors (1) besitzt, wobei eine Dichtung (12), die die Abdichtung gegenüber dem Kern des Rotors bewirkt, auf der Bandage (11') montiert ist.

**2.** Dampfturbine nach Anspruch 1 mit einem Leckstrom an der Basis der Blende (6), dadurch gekennzeichnet, daß der Leckstrom praktisch axial in die Hauptströmung eingespeist wird.

**3.** Dampfturbine nach Anspruch 1, dadurch gekennzeichnet, daß der Ansatz (16) jeder auf dem Rotor (1) befestigten Schaufel (8) ein im wesentlichen zur Rotorachse paralleles Loch (18) aufweist, das die beiden Seiten des Ansatzes (1) miteinander verbindet und dessen Mündung in der Nähe der Basis der Blende (6) liegt.

**4.** Dampfturbine nach einem der Ansprüche 1 bis 3, bei der die Basis der Blende (6) eine Dichtung (12) bestehend aus mehreren in Reihe geschalteten Kammern aufweist, während der Scheitel der beweglichen Schaufeln (8) eine Dichtung (13) besitzt, dadurch gekennzeichnet, daß die ortsfesten Schaufeln (20) und die Blende (6) Löcher (19, 19') aufweisen, die den Leckdampf in der ersten Kammer (21) der Dichtung (12) an der Basis der Blende (6) ansaugen und axial an den Eingang der Dichtung (13) der beweglichen Schaufeln (8) abgeben.

**5.** Dampfturbine nach Anspruch 3, in der die Bandage (11') der Blende (6), auf der die Füße der ortsfesten Schaufeln (20) montiert sind, eine Dichtung (12) bestehend aus mehreren in Reihe liegenden Kammern enthält, dadurch gekennzeichnet, daß die Bandage (11') geneigte Kanäle (22) aufweist, die eine der letzten Kammern (23) mit der Hauptströmung in Verbindung bringt, so daß der Leckstrom an der Basis der Blende (6) tangential in den Kanal (25) wieder eingespeist wird, der durch zwei aufeinanderfolgende Schaufeln (20) der ortsfesten Beschaufelung (10) gebildet wird.

# FIG.1

# FIG.3

# FIG.2

FIG.4

FIG.5

FIG.6

FIG.7

FIG.8

EP 0 509 921 B1

# FIG.9

# FIG.10

# FIG.11

# FIG.12

# FIG.13

A : UTILISATION D'UN TAMBOUR

B : REDUCTION DES PERTES AERODYNAMIQUES DUES AUX FUITES

SUPERCRITIQUES

SUBCRITIQUES

P MODULE (MW)